# EUROPÄISCHE PATENTSCHRIFT

(11) **EP 1 233 913 B1**
(45) Veröffentlichungstag und Bekanntmachung des Hinweises auf die Patenterteilung: **15.02.2006**
(21) Anmeldenummer: 00971306.6
(22) Anmeldetag: 29.09.2000
(51) Int. Cl.: B65D 65/14, B65D 65/10

(54) **KUNSTSTOFFFOLIE**
PLASTIC FOIL
FEUILLE PLASTIQUE

(30) Priorität: 07.10.1999 DE 19948286; 05.05.2000 DE 10021687
(43) Veröffentlichungstag der Anmeldung: 28.08.2002
(60) Teilanmeldung: 03025113.6
(73) Patentinhaber: Huhtamaki Ronsberg Zweigniederlassung der Huhtamaki Deutschland GmbH & Co. KG., 87671 Ronsberg/Allgäu (DE)
(72) Erfinder: BATTEGAZZORE, Rinaldo, I-15058 Viauzzolo (IT); Dr. Hertlein, Jochen, 61118 Bad Vilbel (DE)
(74) Vertreter: Hutzelmann, Gerhard
(86) Internationale Anmeldenummer: PCT/EP2000/009577
(87) Internationale Veröffentlichungsnummer: WO 2001/025109

(56) Entgegenhaltungen:
- EP-A- 0 870 695
- EP-A- 0 891 930
- EP-A- 0 990 596
- US-A- 3 978 260

## Beschreibung

Die Erfindung bezieht sich auf eine Kunststoffolie, insbesondere zum Verpacken von vorzugsweise würfelförmigen Produkten, wie z.B. Suppenwürfeln, wobei die Kunststoffolie aus einer Polyolefinfolie, vorzugsweise PE oder PP besteht und einseitig mit einer Siegelschicht versehen ist.

Aus EP-A-0 870 695 ist eine derartige Kunststoffolie bekannt.

Darüber hinaus beschreibt EP-A-0 891 930 eine ähnliche Kunststoffolie, wie auch die EP-A-0 990 596.

Für derartige Zwecke wurden bisher meist Aluminium-Papier-Verbunde verwendet, was sowohl in der Herstellung als auch beim Recycling schwierig zu handhaben ist.

Der Erfindung liegt die Aufgabe zugrunde, eine Kunststoffolie aufzuzeigen, die für derartige Einsatzzwecke sehr gut geeignet ist.

Diese Aufgabe wird erfindungsgemäß dadurch gelöst, daß die Kunststoffolie auf ihrer Aussenseite mit der Siegelschicht versehen ist, wobei die Siegelschicht in einer Stärke von 1 bis 15 g/m² aufgetragen ist, und wobei ein Farbauftrag vorgesehen ist.

Damit wird durch einfaches Auffalten und Zusammendrücken eine zuverlässig verschlossene Verpackung geschaffen, die zudem mit Hinweisen, Logos oder dergleichen versehen sein kann.

Hierbei wird durch einfaches Auffalten und Warmverpressen eine zuverlässig verschlossene Verpackung erzielt, die dennoch einen Farbauftrag aufweist.

Als Siegelschicht wird dabei gemäß einer vorteilhaften Ausgestaltung der Erfindung ein Heißsiegellack vorgesehen.

Dieser Heißsiegellack kann besonders einfach auf die Kunststoffolie aufgebracht werden.

Eine vorteilhafte weitere Ausgestaltung der Erfindung liegt darin, daß die Kunststoffolie aus OPP oder OPE besteht.

Kunststoffolien aus beiden Materialien lassen sich besonders gut falten.

Als sehr vorteilhaft hat es sich dabei ergeben, wenn gemäß einer weiteren Ausgestaltung der Erfindung die Kunststoffolie eine Dicke von 10 bis 100µm aufweist.

Kunststoffolien in diesem Dickenbereich haben sich als besonders günstig erwiesen.

Eine weitere vorteilhafte Ausgestaltung der Erfindung ist dadurch gekennzeichnet, daß die Kunststoffolie wenigstens einseitig metallisiert ist.

Es hat sich als besonders günstig herausgestellt, wenn gemäß einer weiteren Ausgestaltung der Erfindung die auf der Außenseite der Kunststoffolie vorgesehene Siegelschicht faconartig angeordnet ist.

Damit liegt diese Siegelschicht nur dort vor, wo sie auch gebraucht wird.

Ebenfalls sehr günstig ist es, wenn auf der Kunststoffolie ein Farbauftrag vorgesehen ist.

Dieser Farbauftrag kann gemäß einer weiteren Ausgestaltung der Erfindung mit einem Abdecklack versehen sein.

Dadurch ist die Farbe zusätzlich geschützt.

Besonders günstig ist es dabei, wenn gemäß einer weiteren Ausgestaltung der Erfindung der Abdecklack im Druckverfahren aufgebracht ist.

Der Abdecklack kann gemäß einer weiteren Ausgestaltung der Erfindung in einer Stärke von 0.1 bis 10.0 g/m² aufgetragen sein.

In der Zeichnung ist die Erfindung anhand von zwei Ausführungsbeispielen veranschaulicht. Dabei zeigen:
- Fig.1: einen Schnitt durch eine Kunststoffolie,
- Fig.2: einen schlauchförmigen Abschnitt der Kunststoffolie,
- Fig.3: einen Suppenwürfel mit der Folie gemäß Fig.1 oder 2 eingeschlagen,
- Fig.4: einen Schnitt durch eine weitere Kunststoffolie,
- Fig.5: einen schlauchförmigen Abschnitt aus der Kunststoffolie gemäß Fig.4 und
- Fig.6: einen Suppenwürfel in die Folie gemäß Fig. 4 und 5 eingeschlagen.

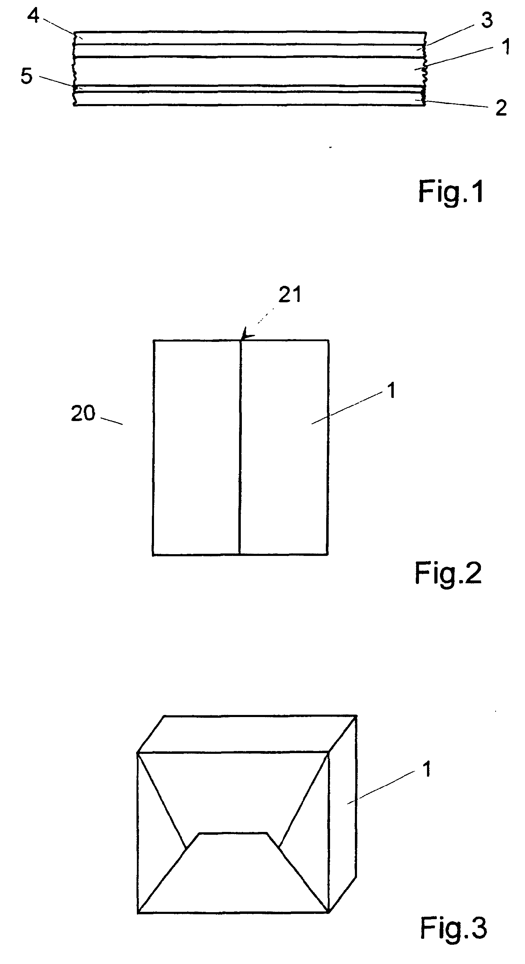

Mit 1 ist in Fig.1 eine Kunststoffolie bezeichnet, die aus OPE hergestellt ist. Auf der einen Seite ist diese OPE-Folie 1 mit einem Heißsiegellack 2 beschichtet, während die andere Seite einen Farbdruck 3 aufweist.

Dieser Farbdruck 3 ist zusätzlich mit einem Überdrucklack 4 versehen.

Einseitig ist die Kunststoffolie 1 noch metallisiert (Schicht 5).

Ein Abschnitt dieser Kunststoffolie 1 ist entlang einer Längsnaht 21 zu einem Schlauch 20 geformt. Zum Bilden einer Suppenwürfelverpackung, wie sie in Fig.3 dargestellt ist, wird zuerst das eine Ende des Schlauches 20 eingefaltet und daraufhin das Füllgut eingebracht. Danach wird das andere Ende des Schlauchabschnittes der Kunststoffolie 1 ebenfalls eingefaltet. Aufgrund der guten Faltbarkeit der Kunststoffolie legen sich die eingefalteten Zwickelecken sehr eng an, so daß auch ohne zusätzliches Ansiegeln eine dichte Verpackung erzielt wird.

Anstelle der schlauchförmigen Verpackung kann beim Vorliegen eines blockförmigen Füllgutes dieses mittels eines planliegenden Folien-Abschnittes eingeschlagen werden.

Für besonders empfindliche Füllgüter ist es bei beiden Ausgestaltungen möglich, die einzelnen eingefalteten End-Abschnitte miteinander zu versiegeln.

Anstelle von OPE kann auch OPP oder PP als Material für die Kunststoffolie verwendet werden. Die Dicke der Folie liegt bei etwa 50 µm, kann aber entsprechend den Anforderungen zwischen 10 und 100 µm variieren.

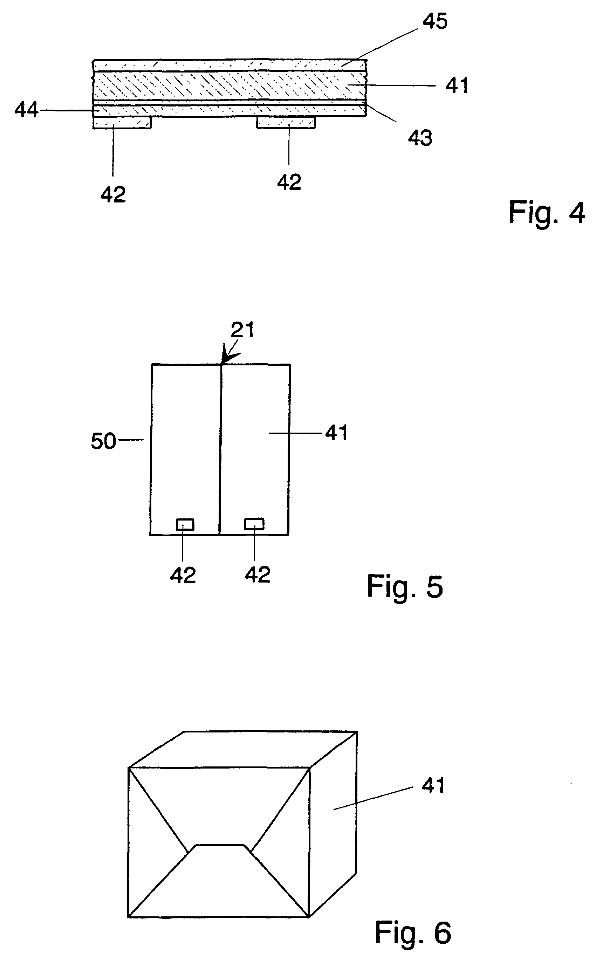

Beim Ausführungsbeispiel nach Fig.4 ist mit 41 eine weitere Kunststoffolie bezeichnet, die aus OPE hergestellt ist. Auf der einen Seite ist diese OPE-Folie 41 mit einer druckempfindlichen Klebesubstanz 42 beschichtet. Unter dieser Klebesubstanz ist ein Farbdruck 43 vorgesehen, der zusätzlich mit einem Überdrucklack 44 versehen ist.

Die Klebesubstanz kann dabei faconartig aufgetragen sein, was sowohl auf der Innenals auch auf der Außenseite sinnvoll ist.

Zusätzlich zur dem Farbdruck 43 kann die Kunststoffolie 41 noch einseitig metallisiert (Schicht 45) werden.

Ein Abschnitt dieser Kunststoffolie 41 wird entsprechend dem vorhergehenden Ausführungsbeispiel entlang einer Längsnaht 21 zu einem Schlauch 50 geformt. Zum Bilden einer Suppenwürfelverpackung, wie sie in Fig.5 dargestellt ist, wird zuerst das eine Ende des Schlauches 50 eingefaltet und daraufhin das Füllgut eingebracht. Danach wird das andere Ende des Schlauchabschnittes der Kunststoffolie 41 ebenfalls eingefaltet. Aufgrund der guten Faltbarkeit der Kunststoffolie legen sich die eingefalteten Zwickelecken sehr eng an. Zusätzlich werden die Zwickelecken noch mit Hilfe der Klebeschicht an der Außenseite der Verpackung angeklebt. Bei entsprechender Beschichtung ist auch ein Ansiegeln möglich.

Anstelle der schlauchförmigen Verpackung kann beim Vorliegen eines blockförmigen Füllgutes dieses mittels eines planliegenden Folien-Abschnittes eingeschlagen werden.

Anstelle von OPE kann auch OPP oder PP als Material für die Kunststoffolie verwendet werden. Die Dicke der Folie liegt bei etwa 50 µm, kann aber entsprechend den Anforderungen zwischen 10 und 100 µm variieren.

## Patentansprüche

1. Kunststoffolie(1,41), insbesondere zum Verpacken von vorzugsweise würfelförmigen Produkten, wie z.B. Suppenwürfeln, wobei die Kunststoffolie (1,41) aus einer Polyolefinfolie, vorzugsweise PE oder PP besteht und einseitig mit einer Siegelschicht(2,42) versehen ist, **dadurch gekennzeichnet, daß** die Kunststoffolie(1,41) auf ihrer Außenseite mit der Siegelschicht(2,42) versehen ist, wobei die Siegelschicht in einer Stärke von 1 bis 15 g/m² aufgetragen ist, und wobei ein Farbauftrag(3,43) vorgesehen ist.

2. Kunststoffolie nach Anspruch 1, **dadurch gekennzeichnet, daß** als Siegelschicht ein Heißsiegellack(2,42) vorgesehen ist.

3. Kunststoffolie nach Anspruch 1 oder 2, **dadurch gekennzeichnet, daß** die Kunststoffolie(1,41) aus OPP oder OPE besteht.

4. Kunststoffolie nach Anspruch 1, 2 oder 3, **dadurch gekennzeichnet, daß** die Kunststoffolie(1,41) eine Dicke von 10 bis 100 µm aufweist.

5. Kunststoffolie nach einem der vorhergehenden Ansprüche, **dadurch gekennzeichnet, daß** die Kunststoffolie(1,41) wenigstens einseitig metallisiert ist.

6. Kunststoffolie nach einem der vorhergehenden Ansprüche, **dadurch gekennzeichnet, daß** die auf der Außenseite der Kunststoffolie vorgesehene Siegelschicht(2,42) faconartig angeordnet ist.

7. Kunststoffolie nach einem der vorangehenden Ansprüche, **dadurch gekennzeichnet, daß** der Farbauftrag(3,43) mit einem Abdecklack(4,44) versehen ist.

8. Kunststoffolie nach Anspruch 7, **dadurch gekennzeichnet, daß** der Abdecklack (4,44) im Druckverfahren aufgebracht ist.

9. Kunststoffolie nach Anspruch 7 oder 8, **dadurch gekennzeichnet, daß** der Abdecklack(4,44) in einer Stärke von 0.1 bis 10.0 g/m² aufgetragen ist.

## Claims

1. Plastic film (1, 41), particularly for packaging preferably cube-shaped products such as soup cubes, where the plastic film (1, 41) consists of a polyolefin film, preferably PE or PP, and is provided on one side with a sealing layer (2, 42), wherein the plastic film (1, 41) is provided with the sealing layer (2, 42) on its outside, the sealing layer is applied in a thickness of 1 to 15 g/m² and an ink layer (3, 43) is applied.

2. Plastic film according to claim 1, **wherein** a heat-seal lacquer (2, 42) is provided as the sealing layer.

3. Plastic film according to claim 1 or 2, wherein the plastic film (1, 41) consists of OPP or OPE.

4. Plastic film according to claim 1, 2 or 3, wherein the plastic film (1, 41) is 10 to 100 µ thick.

5. Plastic film according to one of the previous claims, wherein the plastic film (1, 41) is metallised on at least one side.

6. Plastic film according to one of the previous claims, wherein the sealing layer (2, 42) provided on the outside of the plastic film is applied in a pattern.

7. Plastic film according to one of the previous claims, wherein the ink layer (3, 43) is provided with a masking lacquer (4, 44).

8. Plastic film according to claim 7, wherein the masking lacquer (4, 44) is applied in the printing process.

9. Plastic film according to claim 7 or 8, wherein the masking lacquer (4, 44) is applied in a thickness of 0.1 to 10.0 g/m².

## Revendications

1. Feuille plastique (1, 41), destinée en particulier à l'emballage de produits de préférence de type cubique, tels que par ex. des briques de soupe, la feuille plastique (1, 41) étant une feuille de polyoléfine, de préférence de polyéthylène ou de polypropylène, et étant pourvue d'une couche de scellage (2, 42) sur une face, **caractérisée en ce que** la feuille plastique (1, 41) sur sa face extérieure est pourvue de la couche de scellage (2, 42), la couche de scellage étant appliquée avec un grammage de 1 à 15 g/m², et une couche de couleur (3, 43) étant prévue.

2. Feuille plastique selon la revendication 1, **caractérisée en ce que** la couche de scellage est un vernis thermodurcissable (2, 42).

3. Feuille plastique selon la revendication 1 ou 2, **caractérisée en ce que** la feuille plastique (1, 41) est en OPP ou en OPE.

4. Feuille plastique selon la revendication 1, 2 ou 3, **caractérisée en ce que** la feuille plastique (1, 41) présente une épaisseur comprise entre 10 et 100 µm.

5. Feuille plastique selon l'une quelconque des revendications précédentes, **caractérisée en ce que** la feuille plastique (1, 41) est métallisée d'un côté au moins.

6. Feuille plastique selon l'une quelconque des revendications précédentes, **caractérisée en ce que** la couche de scellage (2, 42) prévue sur le côté extérieur de la feuille plastique est une couche à façon.

7. Feuille plastique selon l'une quelconque des revendications précédentes, **caractérisée en ce que** la couche de couleur (3, 43) est pourvue d'un vernis couvrant (4, 44).

8. Feuille plastique selon la revendication 7, **caractérisée en ce que** le vernis couvrant (4, 44) est déposé dans le cadre du procédé d'impression.

9. Feuille plastique selon la revendication 7 ou 8, **caractérisée en ce que** le vernis couvrant (4, 44) est déposé selon un grammage de 0,1 à 10,0 g/m².
